# EUROPEAN PATENT SPECIFICATION

(11) **EP 2 752 853 B1**
(45) Date of publication and mention of the grant of the patent: **02.12.2015**
(21) Application number: 13305002.1
(22) Date of filing: 03.01.2013
(51) Int. Cl.: G11B 27/036, H04N 21/63, G06F 17/30, H04N 21/266, H04N 21/84, H04N 21/845, H04N 21/472

(54) **Worklist with playlist and query for video composition by sequentially selecting segments from servers depending on local content availability**
Worklist mit Playlist und Abfrage zur Erzeugung einer Videouebersicht mittels eines iterativen Selektierens von lokal fehlenden Abschnitten aus einem Videoserversnetzwerk
Liste de travail avec liste de lecture et requête pour une composition video par selection itérative de segments manquants dans un réseau de serveurs vidéo

(43) Date of publication of application: 09.07.2014
(73) Proprietor: ALCATEL LUCENT, 92100 Boulogne-Billancourt (FR)
(72) Inventor: Outtagarts, Abdelkader, 92160 Antony (FR); Hebbar, Abdelkrim, 91400 Orsay (FR)
(74) Representative: ALU Antw Patent Attorneys

(56) References cited:
- WO-A2-03/096669
- WO-A2-2007/082166
- US-A1- 2003 004 961
- US-A1- 2009 037 960
- US-A1- 2009 087 161
- ABDELKADER OUTTAGARTS ET AL: "A Cloud-Based Collaborative and Automatic Video Editor", MULTIMEDIA (ISM), 2012 IEEE INTERNATIONAL SYMPOSIUM ON, IEEE, 10 December 2012 (2012-12-10), pages 380-381, XP032323166, DOI: 10.1109/ISM.2012.78 ISBN: 978-1-4673-4370-1
- ABDERRAHMANE MAARADJI ET AL: "Social Web Mashups Full Completion via Frequent Sequence Mining", 2011 IEEE WORLD CONGRESS ON SERVICES, IEEE, 4 July 2011 (2011-07-04), pages 9-16, XP032052484, DOI: 10.1109/SERVICES.2011.98 ISBN: 978-1-4577-0879-4
- FREDERIC THOUIN ET AL: "Video-on-Demand Networks: Design Approaches and Future Challenges", IEEE NETWORK, IEEE SERVICE CENTER, NEW YORK, NY, US, vol. 21, no. 2, 1 March 2007 (2007-03-01), pages 42-48, XP011175243, ISSN: 0890-8044
- ANSGAR SCHERP: "Canonical processes for creating personalized semantically rich multimedia presentations", MULTIMEDIA SYSTEMS, SPRINGER, BERLIN, DE, vol. 14, no. 6, 3 September 2008 (2008-09-03), pages 415-425, XP019659405, ISSN: 1432-1882, DOI: 10.1007/S00530-008-0139-8

## Description

### FIELD OF THE INVENTION

The present invention relates to the field of video editing, and in particular to the automatic generation of a video.

### BACKGROUND

Known video editing tools comprises PC-based softwares allowing a user to edit videos by cutting, modifying and composing new videos. Such PC-based solution requires that all the source video files be available in the user's PC. If the user wants to use a video from a distant server, he needs to download it first.

Other video editing tools are online editing tools. The user connects to a server with his terminal, and processing is performed on the server. Such server-based solution requires that all the source video files be available in the server. If the user wants to use a video available on his terminal, he needs to upload it to the server first.

In both case, in order to combine videos from multiple sources, it is necessary to transfer the videos.

US2009/0087161 defines the generating of video using video clips from several mobile devices in a peer-to-peer or client-centric configuration. Source clips may be stored across multiple client devices in a distributed architecture, each having video editing capability.

J Recent works has focused on automatic video editing. Automatic video editing use video analysis and signal processing in order to automatically select and combine video segments and audio files. However, the known solutions of automatic video editing are PC-based and therefore also require that all the source video files be available in the user's PC. Consequently, in order to automatically analyze, select and combine videos from multiple sources, it is also necessary to transfer the videos.

### SUMMARY

It is thus an object of embodiments of the present invention to propose an improved video server and a video generation method, which do not show the inherent shortcomings of the prior art.

According to embodiments of the present invention this object is achieved by a video server comprising:
- a video descriptor generation module configured for:
   - selecting video segments stored in a video database associated with the video server, in function of selection criteria, and
   - generating a video descriptor, in function of the selected video segments; and
- a video descriptor combination module configured for:
   - receiving working data from another video server, said working data comprising selection criteria and a first video descriptor,
   - obtaining a second video descriptor from the video descriptor generation module, in function of said selection criteria,
   - determining a third video descriptor in function of said first video descriptor and said second video descriptor,
   - storing the third video descriptor in the working data, and
   - generating a video in function of the third video descriptor, if a completion criterion is met, or
   - transferring said working data to another video server, if said completion criterion is not met.

Correspondingly, embodiments of the invention relates to a system comprising a plurality of video servers connected by a network, and to a method for generating a video executed by a video server, comprising:
- receiving working data from another video server, said working data comprising selection criteria and a first video descriptor,
- selecting video segments stored in a video database associated with the video server, in function of the selection criteria,
- generating a second video descriptor, in function of the selected video segments,
- determining a third video descriptor in function of said first video descriptor and said second video descriptor,
- storing the third video descriptor in the working data, and
- generating a video in function of the third video descriptor, if a completion criterion is met, or
- transferring said working data to another video server, if said completion criterion is not met.

In this way, a user may receive an automatically generated video in a simple and efficient manner. The video may contain video segments selected from a plurality of databases associated with respective video servers, without the need to download all the video of the databases to a user terminal or to a unique video server.

The video descriptor combination module may comprise resources for executing a mobile agent migrated from another video server.

The resources may comprise a computer program stored in a memory.

The selection criteria may comprise at least one of: a keyword entered by a user on a user terminal, selection parameters specified by the user terminal, a user ID associated with selection preferences of a user.

In an embodiment, determining said third video descriptor comprises determining an energy cost of transferring a video segment described in said first video descriptor and an energy cost of transferring a video segment described in said second video descriptor.

In an embodiment, said completion criterion is determined in function of an energy cost of rendering the third video descriptor.

An embodiment of the invention relates to a computer program including instructions adapted to perform the above-mentioned method when said program is executed by a computer.

In an embodiment, the system comprises at least one user terminal configured for:
- sending selection criteria to one of the video servers, and
- receiving a video from one of the video servers.

### BRIEF DESCRIPTION OF THE DRAWINGS

The above and other objects and features of the invention will become more apparent and the invention itself will be best understood by referring to the following description of embodiments taken in conjunction with the accompanying drawings wherein:
Figure 1 shows a system according to an embodiment of the invention,
Figure 2 is a structural representation of a video server of the system of figure 1,
Figure 3 is a functional representation of a video server of the system of figure 1,
Figure 4 is a flowchart of a method executed by a mobile agent in the system of figure 1, and
Figure 5 is a flow diagram which illustrates the functioning of the system of figure 1.

### DESCRIPTION OF EMBODIMENTS

It is to be remarked that the functions of the various elements shown in the figures, including any functional blocks labeled as "module" or "unit", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

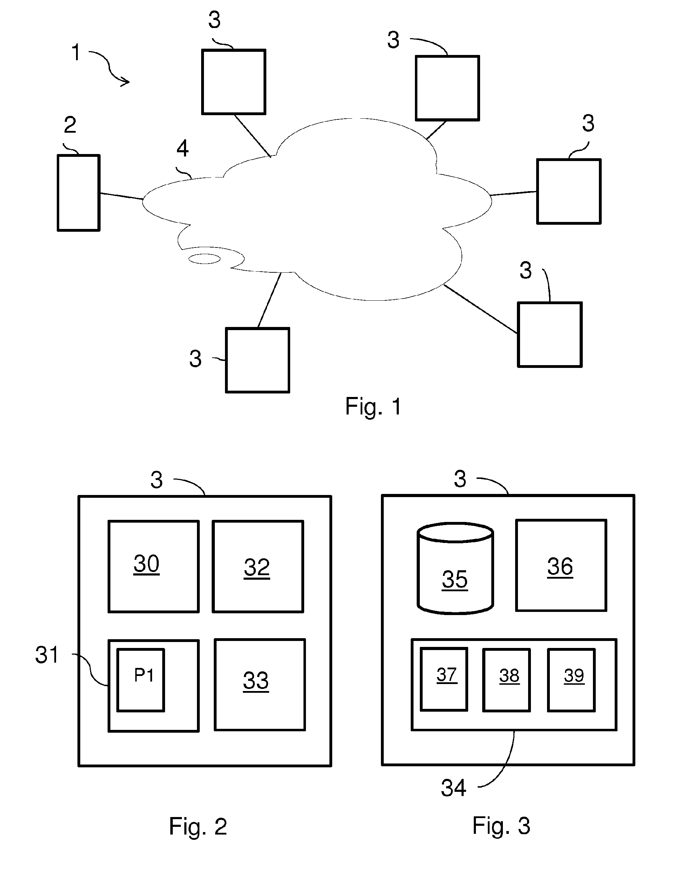

**Figure 1** shows a video generation system 1 comprising a user terminal 2, a plurality of video servers 3 and a network 4.

The user terminal 2 may be any device capable of communication with a video server 3 through the network 4 and displaying a video, for example a PC, a Smartphone, a TV, a Set Top Box...

**Figure 2** is a structural representation of one of the video server 3. The video server 3 presents the material architecture of a computer and comprises a processor 30, a non-volatile memory 31, a volatile memory 32 and a communication interface 33. The processor 30 may execute computer programs stored in the non-volatile memory 31 and/or the volatile memory 32, using the volatile memory 32 as working space. The non-volatile memory 31 and the volatile memory 32 may store data and computer programs. The communication interface 33 allows communicating with the user terminal 2 and the other video servers 3, through the network 4.

**Figure 3** is a functional representation of one of the video server 3. The video server 3 comprises a video descriptor generation module 34, a video database 35 and a video descriptor combination module 36.

Figure 3 shows the video database 35 included in the video server 3. In an alternative embodiment, the system 1 comprises a video server 3 associated with an external video database 35. The video database 35 comprises media content such as video files, still images and/or audio files.

When comparing figures 2 and 3, the video database 35 may correspond to data stored in the non-volatile memory 31 and/or the volatile memory 32, and the video descriptor generation module 34 and the video descriptor combination module 36 may correspond to the execution of computer programs by the processor 30.

The video descriptor generation module 34 is configured for generating a video descriptor by selecting media content from the video database 35, in function of selection criteria. For example, the video descriptor generation module 34 selects video segments and still images to be displayed in a determined order with an audio file. The video descriptor is for example a XML files which defines the beginning and the end of each video segment, transition effects, order of the video segments, the audio accompanying the video segments...

In the present embodiment, the video descriptor generation module 34 comprises a video editor module 37, a video selector module 38 and an analysis and annotation module 39. However, the person skilled in the art of automatic video editing would recognize that various other techniques have been developed for automatically selecting and combining audio and video segments and would be suitable for use in the video descriptor generation module 34.

The analysis and annotation module 39 is in charge of analyzing the media of the database 35 in order to extract textual description of each media. It may include the following functions:
- Face detection/recognition: This function allows detecting and recognizing people in the media in order to add temporal annotation of a video.
- Attention detection: This function extracts the attention of people in a video and adds temporal annotation to the video.
- Audio sentence sense detection: Extracts the sense of audio sentence in the media and adds temporal annotation.
- Semantic and structure analysis: Analysis of the metadata of the media.

The video selector module 38 is in charge of selecting video segments (or shots) from the database 35. It has the following functions:
- Shot marker: This function allows adding marks with different levels on shots in order to facilitate the selection.
- Shot selection: This function selects appropriate shots in function of the mark levels.
- Sequence selection: The role of this function is to select appropriate sequence of shots using mark levels.
- Music selection: Selects an audio file to be added in the composition, in function of a user knowledge database and marks.
- Audio sentence selection: Using metadata provided by the analysis and annotation module 39, marks and the user knowledge database, this function allows selecting an appropriate audio to add in the video composition.
- Voting on shots: This function compares marks and votes for a shot in order to facilitate shots selection.

The video editor module 37 has the following functions:
- Incoming event/criterion analysis: This function analyses the events and criterion coming from the video descriptor combination module 36.
- Searching shots, image and audio: this function allows searching appropriate media which match the criterion imposed by the video descriptor combination module 36,
- Automatic Editing video: This function automatically selects highlight segments from the video selector module 35 and chain them with selected audio in order to create a new video,
- Analyzing user feedback: analyses feedback from the user,
- Saving Knowledge: The knowledge captured by the video editor module 37 and the video descriptor combination module 36 is stored in distributed database in order to be reused in video editing process.

The video descriptor combination module 36 has the following functions:
- User feedback analysis aggregation: the video descriptor combination module 36 extracts the user feedbacks and stores them in a distributed database in order to be used on other video servers 3. The results of the analysis are used to compose better video composition to the users.
- Video composition analysis: This function analyzes the video compositions generated locally by the video editor modules 37. The goal of this function is to select the best of the compositions.
- Energy balance calculation: To optimize the reduction of energy consumption, the video descriptor combination module 36 takes into account the energy cost during the file transfer of video (or the streaming of the video) before composing a video.
- Release a video composition: When a completion criterion is met, this function receives the information for releasing a final composition.
- Rendering the video composition: The rendering is the process which transforms the video descriptor (XML file) to a video. As this function requires more processing time, energy consumption will be higher than the other function. The energy consumption will depend on the finale size of the composed video and the location of the videos that are part of the composition.

In an embodiment, the video descriptor combination module 36 is based on a mobile agent. A mobile agent is a composition of computer software and data which is able to migrate (move) from one computer to another autonomously and continue its execution on the destination computer. In the present description, the data associated with a mobile agent is called "working data". Thus, on a video server 3, the video descriptor combination module 36 comprises resources for executing the mobile agent. On at least one of the video server 3 of the system 1, these resources include a computer program P1 (shown on Figure 2) comprising instructions for executing the functions of the video descriptor combination module 36.

In the system 1, a mobile agent may be executed by a first video server 3. When the mobile agent migrates from the first video server 3 to a second video server 3, execution of the mobile agent is continued on the second video server 3. The second video server 3 may already comprise the computer program P1. In that case, the migration may consist essentially in transferring the state and working data of the computer program P1 from the first video server 3 to the second video server 3. On the other hand, the second video server 3 may not comprise the computer program P1. In that case, the migration may consist essentially in transferring the computer program P1 (i.e. executable code) together with its state and working data from the first video server 3 to the second video server 3. The person skilled in the art of mobile agent knows migration procedures suitable for each of these cases.

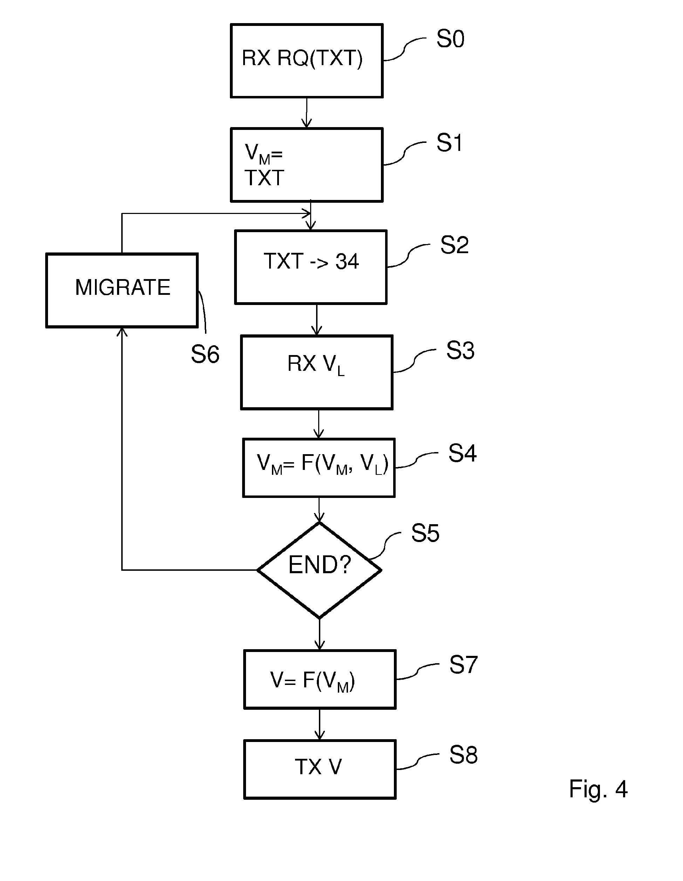

The flowchart of **figure 4** illustrates the method executed by the mobile agent implementing the video descriptor combination module 36 on successive video servers 3.

The method starts when the mobile agent of on one of the video servers 3 receives a request RQ for an automatically generated video, from the user terminal 2 (Step S0). The request RQ includes selection criteria TXT. The selection criteria TXT may include for example keywords entered by the user on his terminal 2, selection parameters specified by the user terminal 2, a user ID which is associated with selection preferences of the user, for example in a user profile stored by the video descriptor combination module 36 and/or the video descriptor generation module 34.

In response to the request RQ, the mobile agent stores, in its working data, the selection criteria TXT and a video descriptor V_{M} which, at this stage, describes a default or empty video (Step S1).

Then, the mobile agent interacts with the local video descriptor generation module 34 (that is, the video descriptor generation module 34 of the video server 3 on which the mobile agent is currently executing) by transferring the selection criteria TXT to the video descriptor generation module 34 (Step S2).

When it receives the selection criteria TXT from the mobile agent, the local video descriptor generation module 34 generates a video descriptor V_{L} in function of the selection criteria TXT. As discussed above with reference with figure 3, the video descriptor V_{L} is based on the video segments stored in the local database 35. Consequently, the mobile agent obtains the video descriptor V_{L} from the local video descriptor generation module 34 (Step S3).

Then, the mobile agent updates the video descriptor V_{M} in function of the local video descriptor V_{L} (Step S4). In other words, the mobile agent determines a new version of the video descriptor V_{M} in function of the previous version of the video descriptor V_{M} and of the local video descriptor V_{L}. The new version of the video descriptor V_{M} is stored in the working data. The local video descriptors V_{L} may also be stored in the working data. In case the working data contains a video descriptor V_{L} of a video server 3 visited previously, the video descriptor V_{M} may be determined in function of the previous version of the video descriptor V_{M}, of the local video descriptor V_{L} and of other video descriptors V_{L} stored in the working data.

When step S4 is executed for the first time, on the video server 3 which received the request RQ at step S0, updating the video descriptor V_{M} in function of the local video descriptor V_{L} may simply consist in determining V_{M} equals to V_{L}. On the other hand, when step S4 is executed again, on another video server 3 after the migration of step S6, updating the video descriptor V_{M} may comprise selecting parts of the previous version of V_{M}, parts of V_{L}, and combining the selected parts in the updated version of V_{M}. The criteria used for this selection may include:
- Quality of the video segments, image, audio,
- Location of the video segments used in the video composition,
- Energy cost of transferring the video segments,
- Energy cost of rendering the video composition,
- Video analysis (object or person recognition, shot quality...),
- Statistical and semantic analysis.

For example, if V_{M} comprises a video segment V1, and V_{L} comprises a video segment V1' similar to V1 (in terms of video analysis and/or statistical or semantic analysis) but with higher quality, V1 may be replaced by V1' in the updated V_{M}.

In another example, V_{M} comprises a video segment V2 located on a distant video server 3 and V_{L} comprises a video segment V2' from the local video server 3 which is similar to V2. The mobile agent may determine an energy cost E of transferring the video segment V2 from the distant video server 3 to the user terminal 2 and the energy cost E' of transferring the video segment V2' from the local video server 3 to the user terminal 2. The person skilled in the art of energy consumption in telecommunication networks knows methods suitable for determining such energy cost, for example based on the geographical locations of the source and destination and the network topology. If E' < E, then V2 may be replaced by V2' in the in the updated V_{M}.

Multiple criteria (such as video quality and energy cost as described above) may be combined in a weight function such that a high energy cost may be balanced by a better quality.

Then, the mobile agent checks whether a completion criterion is met (Step S5). The completion criterion may be determined for example based on:
- The time t elapsed since the receipt of request RQ. For example, if t is above a predetermined threshold to, then the completion criterion is met. This allows providing a response to the user's request RQ within a limited time.
- The energy cost of rendering the video composition on the local video server 3. For example, if the local video server 3 is one associated with a low, preferably a minimal, energy cost of rendering the video composition (in comparison with the energy cost on other video servers), then the completion criterion is met.
- The number of video servers 3 where the mobile agent has migrated. For example, the mobile agent should have migrated to at least N video servers 3 before the completion criterion is met, N being a predetermined integer.

The above criteria may be combined in various manners.

If the completion criterion is not met, then the mobile agent migrates to another video server 3 (Step S6). As explained above, this involve transferring the working data of the mobile agent, which include the video descriptor V_{M} and the selection criteria TXT, from the current/local video server 3 to another destination video server 3, and this may also involve transferring the computer program P1 if needed. The destination video server 3 may be determined by referring to a predetermined order of successive video servers 3. Alternatively, the destination video server 3 may be determined based on network conditions such as bandwidth availability and/or server load... The working data may also contain the video descriptors V_{L} of the video servers 3 previously visited.

Consequently, at step S6, the video descriptor combination module 36 of the destination video server 3 receives the working data and execution of the mobile agent is continued on the destination video server 3 with step S2.

On the other hand, if the completion criterion is met (step S5), then the mobile agent generates a video V corresponding to the video descriptor V_{M} (Step S7). For this purpose, the local video server 3 downloads the media (video segments, audio, images...) described in the video descriptor V_{M} from the respective video servers 3 and performs a rendering of the video V.

The rendered video V is transferred to the user terminal 2 (Step S8), for example by streaming.

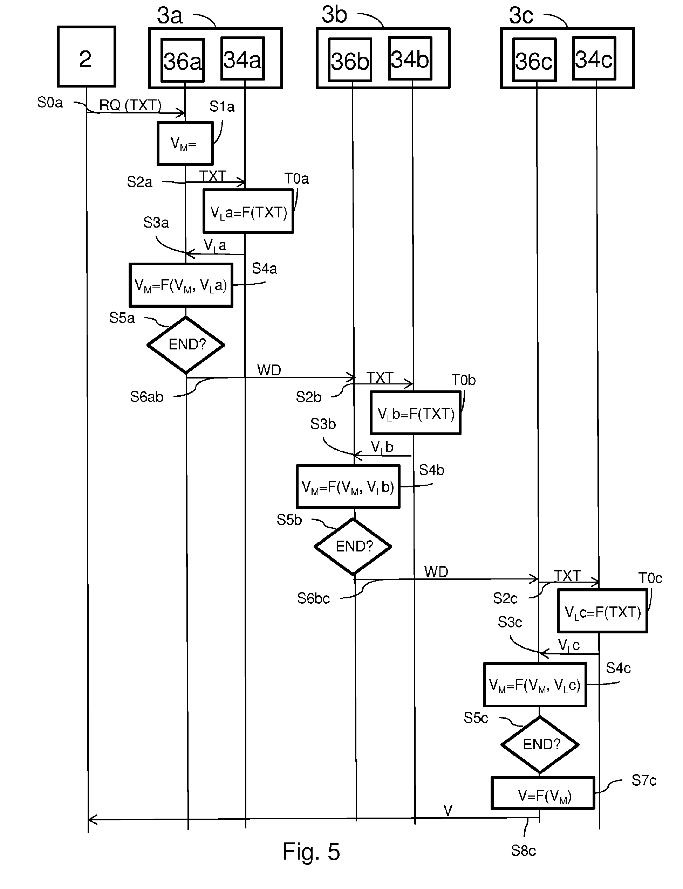

**Figure 5** is a flow diagram illustrating the functioning of the system 1.

Figure 5 shows three of the video servers 3, respectively 3a, 3b and 3c with respective video descriptor generation modules 34a, 34b and 34c and video descriptor combination modules 36a, 36b, 36c. In Figure 5, the steps of the method of figure 4 are labeled with a, b or c depending of the video server 3a, 3b or 3c which executes them.

The video server 3 receives a request RQ including selection criteria TXT, sent by the user terminal 2 (Step S0a). In response to request RQ, execution of a mobile agent is started by the video descriptor combination module 36a. The mobile agent stores a video descriptor V_{M} in its working data (Step S1a) and transfers the selection criteria to the video descriptor generation module 34a (Step S2a). In response to the reception of the selection criteria TXT, the video descriptor generation module 34a generates a video descriptor V_{L}a (Step T0a) and transfers it to the video descriptor combination module 36a.

The video descriptor combination module 36a obtains the video descriptor V_{L}a (Step S3a) and combines it with video descriptor V_{M} (Step S4a). Then, the mobile agent determines whether the completion criterion is met (Step S5a).

Here, it is assumed that the completion criterion is not met at step S5a. Consequently, the mobile agent migrates from video server 3a to video server 3b (Step 6ab). This involves transferring the working data WD, which include the selection criteria TXT and the video descriptor V_{M}, from the video descriptor combination module 36a to the video descriptor combination module 36b.

On video server 3b, the mobile agent transfers the selection criteria TXT (received in the working data WD) to the video descriptor generation module 34b (Step S2b). In response to the reception of the selection criteria TXT, the video descriptor generation module 34b generates a video descriptor V_{L}b (Step T0b) and transfers it to the video descriptor combination module 36b.

The video descriptor combination module 36b obtains the video descriptor V_{L}b (Step S3b) and combines it with video descriptor V_{M} (Step S4b). Then, the mobile agent determines whether the completion criterion is met (Step S5b).

Here again, it is assumed that the completion criterion is not met at step S5b. Consequently, the mobile agent migrates from video server 3b to video server 3c (Step 6bc). This involves transferring the working data WD, which include the selection criteria TXT and the video descriptor V_{M}, from the video descriptor combination module 36b to the video descriptor combination module 36c.

On video server 3c, the mobile agent transfers the selection criteria TXT to the video descriptor generation module 34c (Step S2c). In response to the reception of the selection criteria TXT, the video descriptor generation module 34c generates a video descriptor V_{L}c (Step T0c) and transfers it to the video descriptor combination module 36c.

The video descriptor combination module 36c obtains the video descriptor V_{L}c (Step S3c) and combines it with video descriptor V_{M} (Step S4c). Then, the mobile agent determines whether the completion criterion is met (Step S5c).

Here, it is assumed that the completion criterion is met at step S5c. Consequently, the mobile agent performs a video rendering of the video descriptor V_{M} (Step S7c). In other words, the mobile agent determines a video V corresponding to the video descriptor V_{M}. This may involve downloading video segments from the video servers 3a and 3b and using video segments from the video server 3c. Finally, the rendered video V is transferred (for example streamed) from the video server 3c to the user terminal 2 (Step S8c).

In system 1, the user of user terminal 2 may receive an automatically generated video V in a simple and efficient manner. The video V may contain video segments selected from a plurality of databases 35 associated with respective video servers 3, without the need to download all the video of the databases 35 to the user terminal 2 or to a unique video server. In contrast, the amount of data necessary for the migration of the mobile agent (at step S6ab and S6bc above) is limited to the working data WD and eventually the computer program P1. Since the working data WD contains a video descriptor V_{M} but not the video itself, it remains of limited size. Only at step S7c is the transfer of video segments performed. However, only the selected video segments are transferred, not all the possible video segments available in the databases 35. Again, this limits the bandwidth requirement in network 4.

Furthermore, since the energy costs of transferring the video segments and of rendering the video are taken into account (in particular at steps S4 and S5), the energy consumption for generating the video V may be limited.

Embodiments of the method can be performed by means of dedicated hardware and/of software or any combination of both.

While the principles of the invention have been described above in connection with specific embodiments, it is to be clearly understood that this description is made only by way of example and not as a limitation on the scope of the invention, as defined in the appended claims.

## Claims

1. Video server (3) comprising a video descriptor generation module (34) and a video descriptor combination module (36),
wherein the video descriptor combination module (36) is configured for:
- receiving (S6) working data (WD) from another video server (3), said working data (WD) comprising selection criteria (TXT) and a first video descriptor (V_{M}),
- transferring (S2) said selection criteria (TXT) to said video descriptor generation module (34), wherein the video descriptor generation module (34) is configured for selecting video segments stored in a local video database (35) associated with the video server (3), in function of the selection criteria (TXT) and for generating (T0a, T0b, T0c) a local video descriptor (V_{L}), in function of the selected video segments, when it receives the selection criteria,
- obtaining (S3) the local video descriptor (V_{L}) from the video descriptor generation module (34),
- determining a new version of the first video descriptor (V_{M}) in function of the previous version of said first video descriptor (V_{M}) and said local video descriptor (V_{L}),
- storing the new version of the first video descriptor (V_{M}) in the working data (WD), and
- generating (S7) a video (V) in function of the new version of the first video descriptor (V_{M}), if a completion criterion is met, or
- transferring (S6) said working data (WD) to another video server (3), if said completion criterion is not met.

2. Video server according to claim 1, wherein the video descriptor combination module (36) comprises resources for executing a mobile agent migrated from another video server (3).

3. Video server according to claim 2, wherein said resources comprises a computer program (P1) stored in a memory (31).

4. Video server according to one of claims 1 to 3, wherein said selection criteria (TXT) comprise at least one of: a keyword entered by a user on a user terminal (2), selection parameters specified by the user terminal (2), and a user ID associated with selection preferences of a user.

5. Video server according to one of claims 1 to 4, wherein determining (S4) said new version of the first video descriptor (V_{M}) comprises determining a energy cost of transferring a video segment described in the previous version of the first video descriptor (V_{M}) and an energy cost of transferring a video segment described in said local video descriptor (V_{L}).

6. Video server according to one of claims 1 to 5, wherein said completion criterion is determined in function of an energy cost of rendering the new version of the first video descriptor (V_{M}).

7. System (1) comprising a plurality of video servers (3) according to one of claims 1 to 6 connected by a network (4).

8. System according to claim 7, comprising at least one user terminal (2) configured for:
- sending selection criteria (TXT) to one of the video servers (3), and
- receiving a video (V) from one of the video servers (3).

9. Method for generating a video (V) executed by a video server (3), comprising:
- receiving (S6) working data (WD) from another video server (3), said working data (WD) comprising selection criteria (TXT) and a first video descriptor (V_{M}),
- selecting video segments stored in a local video database (35) associated with the video server (3), in function of the selection criteria (TXT),
- generating (T0a, T0b, T0c) a local video descriptor (V_{L}), in function of the selected video segments,
- determining (S4) a new version of the first video descriptor (V_{M}) in function of the previous version of the first video descriptor (V_{M}) and said local video descriptor (V_{L}),
- storing the new version of the first video descriptor (V_{M}) in the working data (WD), and
- generating (S7) a video (V) in function of the new version of the first video descriptor (V_{M}), if a completion criterion is met, or
- transferring (S6) said working data (WD) to another video server (3), if said completion criterion is not met.

10. A computer program including instructions adapted to perform the method of claim 9 when said program is executed by a computer.

## Patentansprüche

1. Videoserver (3), umfassend ein Videodeskriptor-Erzeugungsmodul (34) und ein Videodeskriptor-Kombinationsmodul (36),
wobei das Videodeskriptor-Kombinationsmodul (36) für Folgendes ausgelegt ist:
- Empfangen (S6) von Arbeitsdaten (WD) von einem anderen Videoserver (3), wobei die besagten Arbeitsdaten (WD) Auswahlkriterien (TXT) und einen ersten Videodeskriptor (V_{M}) umfassen,
- Übertragen (S2) der besagten Auswahlkriterien (TXT) an das besagte Videodeskriptor-Erzeugungsmodul (34), wobei das Videodeskriptor-Erzeugungsmodul (34) zum Auswählen von Videoabschnitten ausgelegt ist, die in einer lokalen Videodatenbank (35) in Verbindung mit dem Videoserver (3) gespeichert sind, in Abhängigkeit von den Auswahlkriterien (TXT), und zum Erzeugen (T0a, T0b, T0c) eines lokalen Videodeskriptors (V_{L}), in Abhängigkeit von den ausgewählten Videoabschnitten, wenn es die Auswahlkriterien empfängt,
- Erhalten (S3) des lokalen Videodeskriptors (V_{L}) vom Videodeskriptor-Erzeugungsmodul (34),
- Bestimmen einer neuen Version des ersten Videodeskriptors (V_{M}), in Abhängigkeit von der vorherigen Version des besagten ersten Videodeskriptors (V_{M}) und des besagten lokalen Videodeskriptors (V_{L}),
- Speichern der neuen Version des ersten Videodeskriptors (V_{M}) in den Arbeitsdaten (WD), und
- Erzeugen (S7) eines Videos (V), in Abhängigkeit von der neuen Version des ersten Videodeskriptors (V_{M}), wenn ein Abschlusskriterium erfüllt wird, oder
- Übertragen (S6) der besagten Arbeitsdaten (WD) an einen anderen Videoserver (3), wenn das besagte Abschlusskriterium nicht erfüllt wird.

2. Videoserver nach Anspruch 1, wobei das Videodeskriptor-Kombinationsmodul (36) Einrichtungen zum Ausführen eines von einem anderen Videoserver (3) migrierten mobilen Agenten umfasst.

3. Videoserver nach Anspruch 2, wobei die besagten Einrichtungen ein Computerprogramm (P1) umfassen, das in einem Speicher (31) gespeichert ist.

4. Videoserver nach einem der Ansprüche 1 bis 3, wobei die besagten Auswahlkriterien (TXT) mindestens eines aus Folgendem umfassen: ein Schlagwort, das von einem Benutzer an einem Benutzerendgerät (2) eingegeben wird, Auswahlparameter, die vom Benutzerendgerät (2) definiert werden, und eine Benutzer-ID in Verbindung mit Auswahleinstellungen eines Benutzers.

5. Videoserver nach einem der Ansprüche 1 bis 4, wobei das Bestimmen (S4) der besagten neuen Version des ersten Videodeskriptors (V_{M}) das Bestimmen eines Energieaufwands für das Übertragen eines Videoabschnitts umfasst, der in der vorherigen Version des ersten Videodeskriptors (V_{M}) beschrieben wurde, und eines Energieaufwands für das Übertragen eines Videoabschnitts, der im besagten lokalen Videodeskriptor (V_{L}) beschrieben wird.

6. Videoserver nach einem der Ansprüche 1 bis 5, wobei das besagte Abschlusskriterium in Abhängigkeit von einem Energieaufwand für das Ausführen der neuen Version des ersten Videodeskriptors (V_{M}) bestimmt wird.

7. System (1), umfassend eine Vielzahl von Videoservern (3) nach einem der Ansprüche 1 bis 6, die durch ein Netzwerk (4) verbunden sind.

8. System nach Anspruch 7, umfassend mindestens ein Benutzerendgerät (2), das für Folgendes ausgelegt ist:
- Senden von Auswahlkriterien (TXT) an einen der Videoserver (3), und
- Empfangen eines Videos (V) von einem der Videoserver (3).

9. Verfahren zum Erzeugen eines Videos (V), das von einem Videoserver (3) ausgeführt wird, umfassend:
- Empfangen (S6) von Arbeitsdaten (WD) von einem anderen Videoserver (3), wobei die besagten Arbeitsdaten (WD) Auswahlkriterien (TXT) und einen ersten Videodeskriptor (V_{M}) umfassen,
- Auswählen von Videoabschnitten, die in einer lokalen Videodatenbank (35) in Verbindung mit dem Videoserver (3) gespeichert sind, in Abhängigkeit von den Auswahlkriterien (TXT),
- Erzeugen (T0a, T0b, T0c) eines lokalen Videodeskriptors (V_{L}), in Abhängigkeit von den ausgewählten Videoabschnitten,
- Bestimmen (S4) einer neuen Version des ersten Videodeskriptors (V_{M}), in Abhängigkeit von der vorherigen Version des ersten Videodeskriptors (V_{M}) und des besagten lokalen Videodeskriptors (V_{L}),
- Speichern der neuen Version des ersten Videodeskriptors (V_{M}) in den Arbeitsdaten (WD), und
- Erzeugen (S7) eines Videos (V), in Abhängigkeit von der neuen Version des ersten Videodeskriptors (V_{M}), wenn ein Abschlusskriterium erfüllt wird, oder
- Übertragen (S6) der besagten Arbeitsdaten (WD) an einen anderen Videoserver (3), wenn das besagte Abschlusskriterium nicht erfüllt wird.

10. Computerprogramm mit Befehlen, die angepasst sind, um das Verfahren nach Anspruch 9 durchzuführen, wenn das besagte Programm von einem Computer ausgeführt wird.

## Revendications

1. Serveur vidéo (3) comprenant un module de génération de descripteur vidéo (34) et un module de combinaison de descripteur vidéo (36),
dans lequel le module de combinaison de descripteur vidéo (36) est configuré pour :
- recevoir (S6) des données de travail (WD) provenant d'un autre serveur vidéo (3), lesdites données de travail (WD) comprenant des critères de sélection (TXT) et un premier descripteur vidéo (V_{M}),
- transférer (S2) lesdits critères de sélection (TXT) vers ledit module de génération de descripteur vidéo (34), dans lequel le module de génération de descripteur vidéo (34) est configuré pour sélectionner des segments vidéo stockés dans une base de données vidéo locale (35) associée au serveur vidéo (3), en fonction des critères de sélection (TXT) et pour générer (T0a, T0b, T0c) un descripteur vidéo local (V_{L}), en fonction des segments vidéo sélectionnés, lorsqu'il reçoit les critères de sélection,
- obtenir (S3) le descripteur vidéo local (V_{L}) à partir du module de génération de descripteur vidéo (34),
- déterminer une nouvelle version du premier descripteur vidéo (V_{M}) en fonction de la version précédente dudit premier descripteur vidéo (V_{M}) et dudit descripteur vidéo local (V_{L}),
- stocker la nouvelle version du premier descripteur vidéo (V_{M}) dans les données de travail (WD), et
- générer (S7) une vidéo (V) en fonction de la nouvelle version du premier descripteur vidéo (V_{M}), si un critère d'achèvement est satisfait, ou
- transférer (S6) lesdites données de travail (WD) vers un autre serveur vidéo (3), si ledit critère d'achèvement n'est pas satisfait.

2. Serveur vidéo selon la revendication 1, dans lequel le module de combinaison de descripteur vidéo (36) comprend des ressources pour exécuter un agent mobile qui a migré à partir d'un autre serveur vidéo (3).

3. Serveur vidéo selon la revendication 2, dans lequel lesdites ressources comprennent un programme informatique (P1) stocké dans une mémoire (31).

4. Serveur vidéo selon l'une des revendications 1 à 3, dans lequel lesdits critères de sélection (TXT) comprennent au moins un des éléments suivants : un mot clé entré par un utilisateur sur un terminal utilisateur (2), des paramètres de sélection spécifiés par le terminal utilisateur (2), et une ID d'utilisateur associée aux préférences de sélection d'un utilisateur.

5. Serveur vidéo selon l'une des revendications 1 à 4, dans lequel la détermination (S4) de ladite nouvelle version du premier descripteur vidéo (V_{M}) comprend la détermination d'un coût énergétique du transfert d'un segment vidéo décrit dans la version précédente du premier descripteur vidéo (V_{M}) et d'un coût énergétique du transfert d'un segment vidéo décrit dans ledit descripteur vidéo local (V_{L}).

6. Serveur vidéo selon l'une des revendications 1 à 5, dans lequel ledit critère d'achèvement est déterminé en fonction d'un coût énergétique du rendu de la nouvelle version du premier descripteur vidéo (V_{M}).

7. Système (1) comprenant une pluralité de serveurs vidéo (3) selon l'une des revendications 1 à 6 connectés par un réseau (4).

8. Système selon la revendication 7, comprenant au moins un terminal utilisateur (2) configuré pour :
- envoyer des critères de sélection (TXT) vers un des serveurs vidéo (3), et
- recevoir une vidéo (V) à partir d'un des serveurs vidéo (3).

9. Procédé pour générer une vidéo (V) exécutée par un serveur vidéo (3), comprenant les étapes suivantes :
- recevoir (S6) des données de travail (WD) provenant d'un autre serveur vidéo (3), lesdites données de travail (WD) comprenant des critères de sélection (TXT) et un premier descripteur vidéo (V_{M}),
- sélectionner des segments vidéo stockés dans une base de données vidéo locale (35) associée au serveur vidéo (3), en fonction des critères de sélection (TXT),
- générer (T0a, T0b, T0c) un descripteur vidéo local (V_{L}), en fonction des segments vidéo sélectionnés,
- déterminer (S4) une nouvelle version du premier descripteur vidéo (V_{M}) en fonction de la version précédente du premier descripteur vidéo (V_{M}) et dudit descripteur vidéo local (V_{L}),
- stocker la nouvelle version du premier descripteur vidéo (V_{M}) dans les données de travail (WD), et
- générer (S7) une vidéo (V) en fonction de la nouvelle version du premier descripteur vidéo (V_{M}), si un critère d'achèvement est satisfait, ou
- transférer (S6) lesdites données de travail (WD) vers un autre serveur vidéo (3), si ledit critère d'achèvement n'est pas satisfait.

10. Programme informatique comprenant des instructions adaptées pour exécuter le procédé selon la revendication 9 lorsque ledit programme est exécuté par un ordinateur.
